(19) Europäisches Patentamt
European Patent Office
Office européen des brevets

(11) EP 4 748 867 A1

# (12) EUROPEAN PATENT APPLICATION

(43) Date of publication:
**27.05.2026 Bulletin 2026/22**

(21) Application number: **24306955.6**

(22) Date of filing: **25.11.2024**

(51) International Patent Classification (IPC):
***C08G 18/10*** *(2006.01)* ***C08G 18/32*** *(2006.01)*
***C08G 18/48*** *(2006.01)* ***C08G 18/66*** *(2006.01)*
***C09D 175/08*** *(2006.01)*

(52) Cooperative Patent Classification (CPC):
(C-Sets available)
**C08G 18/3206; C08G 18/10; C08G 18/4812; C08G 18/4825; C08G 18/4829; C08G 18/6674; C09D 175/08;** C08G 2110/0066; C08G 2110/0083; C08G 2150/60 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Saint-Gobain Weber France**
**94370 Sucy en Brie (FR)**

(72) Inventors:
- **HESSELBARTH, Frank**
  **92400 Courbevoie (FR)**
- **VARELAS, Konstantinos**
  **32011 Oinofyta (GR)**

(74) Representative: **Saint-Gobain Recherche**
**41 Quai Lucien Lefranc**
**93300 Aubervilliers (FR)**

## (54) FOAMED WATERPROOFING COATING

(57) The present invention relates to a kit for forming a foamed waterproofing coating, to a foamed waterproofing coating formed from such kit, and to a coated substrate comprising such foamed waterproofing coating. It also relates to a process for waterproofing a substrate using such kit.

EP 4 748 867 A1

(52) Cooperative Patent Classification (CPC): (Cont.)

C-Sets
**C08G 18/10, C08G 18/3206;**
**C08G 18/10, C08G 18/48**

## Description

The present invention relates to a kit for forming a foamed waterproofing coating, to a foamed waterproofing coating formed from such kit, and to a coated substrate comprising such foamed waterproofing coating. It also relates to a process for waterproofing a substrate using such kit.

Over the past few years, many compositions have been developed to waterproof various substrates. In particular, in the construction sector, the waterproofing of roofs, terraces, balconies, wet rooms or facades, uses bituminous or synthetic membranes, assembled by welding, hot-poured asphalt coatings, or systems called in the art "liquid waterproofing systems". The latter consist of materials based on polymeric resins implemented in one or more layers by spraying or by application by roller, brush or trowel. Polyurethane resins are mainly used in such applications, but also polyester resins, acrylic resins, and neoprene bitumens. Polyurethane resins are typically formed by using a 2-component system ("2K"), wherein one component comprises a polyol and the other one comprises a polyisocyanate. Polyurethane-based coatings are very effective waterproofing systems, showing a good adhesion and a good flexibility. However, such PU-based coatings have very low thermal insulation performances.

Also, polyurethane foam systems are highly reactive, which implies a fast application of the components, typically by directly spraying on the substrate. Spraying requires the use of a particular equipment, which is not optimal from a practical point of view.

Thus, there remains a need to provide a coating having at least the same waterproofing and mechanical performances as classical polyurethane-based coatings, but also having improved thermal insulation properties. It would also be advantageous that the coating be obtained from a system having a controlled reactivity, such that it can be easily applied without the need of a spray equipment.

SUMMARY

In this context, the inventors have developed a 2K system combining polyisocyanate and polyol, in which the NCO/OH ratio is such that the reactants can be mixed and easily applied onto a substrate, for instance by means of a brush, a roller or trowel. The system also comprises water, such that a foamed coating can be obtained. The foamed coating obtained by the inventors shows good waterproofing properties, but also high thermal insulation properties. The coating also has good mechanical properties, in particular a high flexibility and high recovery after mechanical pressure. Also, it has been demonstrated that the coating showed a good crack resistance. Advantageously, it is therefore not necessary to add a reinforcement (e.g. mat, mesh...) to the coating.

Finally, the foamed structure of the coating allows advantageously to use a lower amount of raw materials for a given coating thickness, compared to non-foamed coating.

Thus, the present invention relates to a kit comprising :

- a first component comprising a polyisocyanate, and
- a second component comprising a polymeric polyol and water,

wherein the NCO/OH ratio is from 1 to 5, preferably from 1.2 to 4.5, more preferably from 1.5 to 4, even more preferably 2 to 4, for instance from 2 to 3.5, or even from 2.2 to 2.8.

In some embodiments, said polyisocyanate comprises at least one polymer having a NCO-functionality of at least 2, for instance from 2 to 6, from 2 to 5, from 2 to 4, from 2 to 3, or from 2 to 2.5.

In some embodiments, said polyisocyanate comprises:

- a polymer having a NCO-functionality of at least 2 which is formed from (i) a first monomeric diisocyanate and (ii) a polyol; and
- a polymer having a NCO-functionality of at least 2 which is formed from (i) a second monomeric diisocyanate or a polymer of said second monomeric diisocyanate having a NCO-functionality of at least 2 and (ii) a polyol;

said first monomeric diisocyanate and said second monomeric diisocyanate being different. In some embodiments, each of said first and second monomeric diisocyanate comprises at least one aromatic group, preferably at least one phenyl group.

In some embodiments, said first monomeric diisocyanate is toluene 2,4-diisocyanate, toluene 2,6-diisocyanate, or a mixture thereof, and said second monomeric diisocyanate is diphenylmethane-4,4'-diisocyanate, diphenylmethane-2,2'-diisocyanate, diphenylmethane-2,4'-diisocyanate, or a mixture thereof.

In some embodiments, said polymeric polyol is a mixture of a polymer having a OH-functionality of 2 and a polymer having a OH-functionality of 3.

In some embodiments, said polymeric polyol is chosen from polyether polyols, polycarbonate polyols, polyester

polyols, polyisoprene polyols, polybutadiene polyols, copolymers thereof and mixtures thereof, preferably from polyether polyols, polycarbonate polyols, polyester polyols, copolymers thereof and mixtures thereof, more preferably from polyether polyols.

In some embodiments, the second component further comprises a monomeric diol.

In some embodiments, the weight content of water in the second component is from 0.05 to 0.7 %, preferably from 0.1 to 0.5%, more preferably from 0.15 to 0.4% (for instance from 0.15 to 0.20 %), based on the total weight of the second component.

In some embodiments, the first component further comprises a plasticizer, preferably in a weight content from 7 to 25%, more preferably from 10 to 25%, even more preferably from 12 to 20%, for instance from 12 to 18%, based on the total weight of the first component.

In some embodiments, the second component further comprises one or more, preferably all, of:

- a mineral filler, preferably in a weight content from 10 to 20%, more preferably from 12 to 18%, more preferably from 14 to 16%, based on the total weight of the second component;
- a plasticizer, preferably in a weight content from 5 to 15%, more preferably from 7 to 12%, even more preferably from 8 to 10%, based on the total of the second component;
- a pigment, preferably in a weight content from 0.5 to 5%, more preferably from 1 to 3%, based on the total weight of the second component;
- a foam stabilizer, preferably in a weight content from 0.1 to 2%, more preferably from 0.5 to 1.5%, based on the total weight of the second component;
- a foam catalyst preferably in a weight content from 0.05 to 2%, more preferably from 0.1 to 0.5%, based on the total weight of the second component;
- a gelling catalyst preferably in a weight content from 0.05 to 1%, preferably from 0.1 to 0.5%, based on the total weight of the second component.

The present invention also relates to a foamed waterproofing coating formed from a kit as defined herein.

Preferably, said coating does not comprise a reinforcement, such as:

- a reinforcing mesh, such as a fiberglass mesh or a polymer mesh,
- a reinforcing fabric, such as a non-woven fabric, woven fabric, glass fiber mat, or polymer mat,
- a metal-based reinforcement, such as a metal foil, a metal sheet, or an expanded metal lath,
- reinforcing fibers, such as glass fibers or polymer fibers, or
- a scrim or netting, such as a polymer scrim or netting, for instance a polyester or high-density polyethylene netting.

Another object of the present invention is a coated substrate, comprising a substrate and a foamed waterproofing coating disposed on the substrate, wherein said foamed waterproofing coating is as defined herein.

Another object of the present invention is a process for waterproofing a substrate, comprising:

i) providing a kit as defined herein,
ii) contacting the first component and the second component of the kit, so as to obtain a mixture, and
iii) applying said mixture on a substrate, so as to form a foamed waterproofing coating on said su bstrate,

said foamed waterproofing coating preferably having a thickness of 0.1 to 5.0 mm, in particular 0.5 to 3.0 mm, for instance 1.0 to 2.5 mm.

In some embodiments, said substrate is a substrate of a roof, in particular of a flat roof. Preferably, said process further comprises: iv) forming a top coating onto the foamed waterproofing coating.

Preferably, said process does not comprise a step of adding a reinforcement, such as a reinforcing mesh, a reinforcing fabric, a metal-based reinforcement, reinforcing fibers, a scrim or netting.

Another object of the present invention is a use of a kit as defined herein, for forming a foamed waterproofing coating.

## DETAILED DESCRIPTION

The present invention relates to a kit which is suitable for forming a foamed waterproofing coating. Such kit comprises a first and a second component. Said first component and said second component are in separate compartments.

The first component comprises a polyisocyanate.

As used herein, the term "polyisocyanate" refers to:

- any monomeric compound having at least two isocyanate (-NCO) groups (i.e. "monomeric polyisocyanate"),
- any polymer having a NCO-functionality of at least 2 (for instance from 2 to 6, from 2 to 5, from 2 to 4, from 2 to 3, or from 2 to 2.5), or
- a mixture thereof.

Preferably, the polyisocyanate comprises at least one aromatic group, preferably at least one phenyl group.

The monomeric polyisocyanate is preferably a monomeric diisocyanate. Advantageously, said monomeric diisocyanate comprises at least one aromatic group, preferably at least one phenyl group.

Examples of monomeric diisocyanate include, but are not limited to, 1,6-hexamethylenediisocyanate (HDI), isophorone-diisocyanate (IPDI), methylene bis-(4-cyclohexylisocyanate) (HMDI), pentamethylene-diisocyanate (PDI), 4-hexahydrotoluene-diisocyanate, 2,6-hexahydrotoluene diisocyanate, 2,4'-diisocyanatodicyclohexylmethane, 4,4'-diisocyanatodicyclohexylmethane, tetramethylxylene-diisocyanate, 2-methyl-1,5-diisocyanatopentane, 1,5-diisocyanato-2,2-dimethylpentane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane, 1-isocyanato-1-methyl-4-isocyanatomethylcyclohexane, 4,4'-diisocyanato-3,3'-dimethyldicyclohexylmethane, 4,4'-diisocyanato-3,3',5,5'-tetramethyldicyclohexylmethane, 1,8-diisocyanato-p-menthane, bis(isocyanatomethyl)norbornane, bis-(isocyanatomethyl)cyclohexane, 1,4-tetramethylene-diisocyanate, 1,3-bis(isocyanatomethyl)cyclohexane, 1,4-bis(isocyanatomethyl)cyclohexane, cyclohexane-1,3-diisocyanate, cyclohexane-1,4-diisocyanate, 1,10-decane-diisocyanate, 1,12-dodecane-diisocyanate, 2,2,4-trimethylhexamethylene-diisocyanate, 2,4,4-trimethylhexamethylene-diisocyanate, diphenylmethane-2,2'-diisocyanate (2,2'-MDI), diphenylmethane-2,4'-diisocyanate (2,4'-MDI), diphenylmethane-4,4'-diisocyanate (4,4'-MDI), 4,4'-dibenzyl diisocyanate (4,4'-DBDI), toluene 2,4-diisocyanate (2,4-TDI), toluene 2,6-diisocyanate (2,6-TDI), m-xylylene diisocyanate (m-XDI), 2,4'-dibenzyl diisocyanate (2,4'-DBDI), 1,3-bis(isocyanatomethyl) benzene, 1,4-bis(isocyanatomethyl)benzene, 1,3-bis(1-isocyanato-1-methylethyl)benzene, 1,4-bis(1-isocyanato-1-methylethyl)benzene, 1,5-diisocyanatonaphthalene, or any mixture thereof.

Preferred monomeric diisocyanate are diphenylmethane-4,4'-diisocyanate (4,4'-MDI), diphenylmethane-2,2'-diisocyanate (2,2'-MDI), diphenylmethane-2,4'-diisocyanate (2,4'-MDI), toluene 2,4-diisocyanate (2,4-TDI), toluene 2,6-diisocyanate (2,6-TDI), or any mixture thereof.

As used herein, the "NCO-functionality" of a polymer is defined by the following equation (1):

$$\overline{f1} = \frac{\sum xi \times ni}{\sum xi} \quad (1),$$

in which, for each polymer chain i of polymer: xi is the number of moles of such polymer chain *i* and *ni* is the number of NCO groups of such polymer chain i.

For instance, if 1 mole of polymer consists of 0.75 mol ($x_A$) of polymer chains A having 2 NCO groups ($n_A$ = 2) and 0.25 mol ($x_B$) of polymer chains B having 3 NCO groups ($n_B$ = 3), then the NCO-functionality of such polymeric polyisocyanate is $\overline{f1}$ = (0.75 x 2 + 0.25 x 3)/(0.25+0.75) = 2.25.

Said polymer having a NCO-functionality of at least 2 usually has a molecular weight of at least 200 g/mol, preferably at least 300 g/mol, more preferably at least 500 g/mol, even more preferably at least 1000 g/mol, for instance at least 2000 g/mol.

Said polymer having a NCO-functionality of at least 2 usually has an molecular weight of at most 60 000 g/mol, preferably at most 40 000 g/mol, more preferably at most 20 000 g/mol, even more preferably at most 10 000 g/mol, for instance at most 5 000 g/mol.

Unless otherwise mentioned, the molecular weight of a polymer refers herein to a number-average molecular weight of a polymer, and can be determined by size exclusion chromatography ("SEC").

Advantageously, the polyisocyanate comprises (preferably, consists of) at least one polymer having a NCO-functionality of at least 2 (for instance from 2 to 6, from 2 to 5, from 2 to 4, from 2 to 3, or from 2 to 2.5). Said at least one polymer having a NCO-functionality of at least 2 may advantageously comprise at least one aromatic group, preferably at least one phenyl group.

More particularly, the polyisocyanate may comprise (or even, consist of):

- at least one polymer having a NCO-functionality of at least 2 (for instance from 2 to 6, from 2 to 5, from 2 to 4, from 2 to 3, or from 2 to 2.5), and
- a monomeric diisocyanate.

Said at least one polymer having a NCO-functionality of at least 2 may be a polyurethane having a NCO-functionality of at least 2 (for instance from 2 to 6, from 2 to 5, from 2 to 4, from 2 to 3, or from 2 to 2.5).

Said at least one polymer having a NCO-functionality of at least 2 may be a mixture of a polyurethane having a

NCO-functionality of at least 2 (for instance from 2 to 6, from 2 to 5, from 2 to 4, from 2 to 3, or from 2 to 2.5), and of a polymer of a diisocyanate having a NCO-functionality of at least 2.

More particularly, said at least one polymer having a NCO-functionality of at least 2 may be a mixture of:

- a polymer ("$P_A$") having a NCO-functionality of at least 2 (for instance from 2 to 6, from 2 to 5, from 2 to 4, from 2 to 3, or from 2 to 2.5) which is formed from (i) a first monomeric diisocyanate and (ii) a polyol;
- a polymer ("$P_B$") of a second monomeric diisocyanate having a NCO-functionality of at least 2;
- optionally a third monomeric diisocyanate.

wherein said first monomeric diisocyanate and said second monomeric diisocyanate are different.

Preferably, each of said first and second monomeric diisocyanate comprises at least one aromatic group, preferably at least one phenyl group.

Said first monomeric diisocyanate is preferably 2,4-TDI and/or 2,6-TDI.

Said second monomeric diisocyanate is preferably 4,4'-MDI, 2,2'-MDI, 2,4'-MDI, or a mixture thereof, more preferably 4,4'-MDI.

Said third monomeric diisocyanate (when present) may be identical to the first or to the second (preferably, identical to the second) monomeric diisocyanate.

Said third monomeric diisocyanate (when present) is preferably 4,4'-MDI, 2,2'-MDI, 2,4'-MDI, or a mixture thereof, more preferably 4,4'-MDI.

In an embodiment, the total weight content of $P_A$ and $P_B$ in the first component is from 70 to 100 %, preferably from 75 to 95 %, more preferably from 80 to 90 %, based on the total weight of the first component.

The weight ratio of $P_B$ to $P_A$ is advantageously from 0.1 to 20, preferably from 0.5 to 15, more preferably from 1 to 10, even more preferably from 2 to 4, for instance from 2.5 to 3.5.

As used herein, a "polymer of a diisocyanate" refers to a polymerized (typically self-polymerized) form of a monomeric diisocyanate. Said polymer of a diisocyanate may for instance comprise the following repetitive unit:

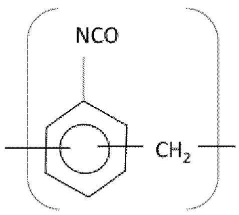

.

Preferably, the at least one polymer having a NCO-functionality of at least 2 is a mixture of:

- a polymer ("$P_A$") having a NCO-functionality of at least 2 (for instance from 2 to 6, from 2 to 5, from 2 to 4, from 2 to 3, or from 2 to 2.5) which is formed from (i) a first monomeric diisocyanate and (ii) a polyol; and
- a polymer ("$P_C$") having a NCO-functionality of at least 2 (for instance from 2 to 6, from 2 to 5, from 2 to 4, from 2 to 3, or from 2 to 2.5) which is formed from (i) a second monomeric diisocyanate or a polymer ("$P_B$") of said second monomeric diisocyanate having a NCO-functionality of at least 2 and (ii) a polyol;

wherein said first monomeric diisocyanate and said second monomeric diisocyanate are different.

Preferably, each of said first and second monomeric diisocyanate comprises at least one aromatic group, preferably at least one phenyl group.

Said first monomeric diisocyanate is preferably 2,4-TDI and/or 2,6-TDI.

Said second monomeric diisocyanate is preferably 4,4'-MDI, 2,2'-MDI, 2,4'-MDI, or a mixture thereof, more preferably 4,4'-MDI.

In an embodiment, the total weight content of $P_A$ and Pc in the first component is from 70 to 100 %, preferably from 75 to 95 %, more preferably from 80 to 90 %, based on the total weight of the first component.

The weight ratio of $P_C$ to $P_A$ is advantageously from 0.1 to 20, preferably from 0.5 to 15, more preferably from 1 to 10, even more preferably from 2 to 4, for instance from 2.5 to 3.5.

More preferably, the polyisocyanate may comprise (or even, consist of):

- a polymer ("$P_A$") having a NCO-functionality of at least 2 (for instance from 2 to 6, from 2 to 5, from 2 to 4, from 2 to 3, or from 2 to 2.5) which is formed from (i) a first monomeric diisocyanate and (ii) a polyol;
- a polymer ("$P_C$") having a NCO-functionality of at least 2 (for instance from 2 to 6, from 2 to 5, from 2 to 4, from 2 to 3, or

from 2 to 2.5) which is formed from (i) a second monomeric diisocyanate or a polymer ("$P_B$") of said second monomeric diisocyanate having a NCO-functionality of at least 2 and (ii) a polyol;
- a third monomeric diisocyanate;

wherein said first monomeric diisocyanate and said second monomeric diisocyanate are different.

Said third monomeric diisocyanate may be identical to the first or to the second (preferably, identical to the second) monomeric diisocyanate.

Preferably, each of said first, second, and third monomeric diisocyanate comprises at least one aromatic group, preferably at least one phenyl group.

Said first monomeric diisocyanate is preferably 2,4-TDI and/or 2,6-TDI.

Said second monomeric diisocyanate is preferably 4,4'-MDI, 2,2'-MDI, 2,4'-MDI, or a mixture thereof, more preferably 4,4'-MDI.

Said third monomeric diisocyanate is preferably 4,4'-MDI, 2,2'-MDI, 2,4'-MDI, or a mixture thereof, more preferably 4,4'-MDI.

In an embodiment, the total weight content of $P_A$ and Pc in the first component is from 70 to 100 %, preferably from 75 to 95 %, more preferably from 80 to 90 %, based on the total weight of the first component.

The weight ratio of $P_C$ to $P_A$ is advantageously from 0.1 to 20, preferably from 0.5 to 15, more preferably from 1 to 10, even more preferably from 2 to 4, for instance from 2.5 to 3.5.

Advantageously, the molecular weight of each of polymers "$P_A$", "$P_B$" and "Pc" is independently from 200 to 60 000 g/mol (e.g. from 200 to 5000 g/mol), preferably from 300 to 40 000 g/mol, more preferably from 500 to 20 000 g/mol, even more preferably from 1000 to 10 000 g/mol, for instance from 2 000 to 5 000 g/mol.

As used herein, a "polyol" refers to:

- any monomeric compound having at least hydroxy (-OH) groups (i.e. "monomeric polyol"),
- any polymer having a OH-functionality of at least 2 (for instance from 2 to 6, from 2 to 5, from 2 to 4, from 2 to 3, or from 2 to 2.5) (i.e. "polymeric polyol"), or
- a mixture thereof.

Monomeric polyols usually have a molecular weight from 40 to 300 g/mol. Examples of monomeric polyol include, but are not limited to, ethylene glycol, propylene glycol, 1,2- and 1,3-propanediol, 1,2-, 1,3-, and 1,4-butanediol, 1,5-pentanediol, 1,6-hexanediol, glycerol, neopentyl glycol, trimethylol propane, pentaerythritol, cyclohexane dimethanol, 1,2- and 1,4-cyclohexanediol, 1,8-octanediol, diethylene glycol, triethylene glycol, dipropylene glycol, tripropylene glycol, and any mixture thereof.

Polymeric polyols usually have a molecular weight of the polymeric polyol used is generally from 300 to 15 000 g/mol, more particularly from 500 to 10 000 g/mol, preferably from 900 to 6 000 g/mol. Examples of polymeric polyol include, but are not limited to, polyether polyols, polycarbonate polyols, polyester polyols, polyisoprene polyols, polybutadiene polyols, copolymers thereof and mixtures thereof, preferably polyether polyols.

Preferably, the polyol used for forming each of polymers "$P_A$" and "Pc" is a polymeric polyol, more preferably a polyether polyol.

The weight content of polyisocyanate in the first component is advantageously from 70 to 100 %, preferably from 75 to 95 %, more preferably from 80 to 90 %, based on the total weight of the first component.

Typically, the first component of the kit of the invention is essentially free of ingredients that are reactive towards NCO-groups, in particular OH-containing compounds (e.g. polyols), $NH_2$- or NH- containing compounds, and water.

The second component of the kit of the invention comprises a polymeric polyol and water.

As used herein, the polymeric polyol refers to a polymer having a OH-functionality of at least 2 (for instance from 2 to 6, from 2 to 5, from 2 to 4, from 2 to 3).

As used herein, the "OH-functionality" of a polymer is defined by the following equation (2):

$$\overline{f2} = \frac{\sum xj \times nj}{\sum xj} \quad (2),$$

in which, for each polymer chain *j* of polymer: *xj* is the number of moles of such polymer chain *j* and nj is the number of OH groups of such polymer chain *j*.

The polymeric polyol of the second component may typically comprise (preferably, consist of) a mixture of polymers having a OH-functionality of at least 2.

Advantageously, said polymeric polyol comprises (preferably, consist of) a mixture of polymers having a OH-functionality of at least 2.

Preferably, said polymeric polyol comprises (preferably, consist of) a mixture of a polymer having a OH-functionality of 2 ("P2") and a polymer having a OH-functionality of 3 ("P3").

In an embodiment, the total weight content of P2 and P3 in the second component is from 50 to 90%, preferably from 60 to 80%, more preferably from 65 to 75%, based on the total weight of the second component.

The weight ratio of P3 to P2 is advantageously from 2 to 50, preferably from 5 to 20.

The polymeric polyol of the second component may advantageously be chosen from polyether polyols, polycarbonate polyols, polyester polyols, polyisoprene polyols, polybutadiene polyols, copolymers thereof and mixtures thereof. Preferably the polymeric polyol is chosen from polyether polyols, polycarbonate polyols, polyester polyols, copolymers thereof and mixtures thereof. More preferably, the polymeric polyol is chosen from polyether polyols.

In a preferred embodiment, the polymeric polyol of the second component comprises (preferably, consists of) a mixture of a polymer having a OH-functionality of 2 ("P2") and a polymer having a OH-functionality of 3 ("P3"), wherein each of P2 and P3 is independently chosen from polyether polyols, polycarbonate polyols, polyester polyols, polyisoprene polyols, polybutadiene polyols, copolymers thereof and mixtures thereof, preferably from polyether polyols, polycarbonate polyols, polyester polyols, copolymers thereof and mixtures thereof, more preferably from polyether polyols.

Polyether polyols can be obtained by the polymerization of a cyclic oxide, for example propylene oxide, ethylene oxide, trimethylene oxide, tetrahydrofuran, 3-methyl tetrahydrofuran or by the addition of one or more of these oxides to initiators such as water, ethylene glycol, propylene glycol, diethylene glycol, glycerol, cyclohexane-dimethanol, trimethylolpropane, pentaerythrityl tetrahydrofuran, bisphenol A. Thus, examples of linear or branched polyether polyols are polypropylene glycol, polyethylene glycol, polytetramethylene glycol or poly(ethylene/propylene) glycol.

Examples of polyester polyols are ester glycols with one or more alcohol functions which are obtained by condensation of polycarboxylic acids (such as malonic acid, succinic acid, glutaric acid, adipic acid, pimelic acid, suberic acid, phthalic anhydride) with polyols. Examples of polyols for preparing polyester polyols are ethylene glycol, propylene glycol, 1,3-propanediol, 1,4-butanediol, diethylene glycol, 1,5-pentanediol, 1,6-hexanediol, glycerol, trimethylolpropane, pentaerythritol, cyclohexane-dimethanol or 1,8-octanediol. Polyester polyols can also be obtained by the polymerization of lactones such as caprolactone. Polyester polyols can also be obtained from unsaturated fatty acids such as oleic acid, linoleic acid, licanic acid, arachidonic acid, ricinoleic acid or linoleic acid from, for example, linseed, soybean, sunflower, rapeseed or herring oil.

Polycarbonate polyols can be obtained by esterification of carbonic acid with a diol or a polyol. Polycarbonate polyols can also be obtained by reaction of phosgene or carbonates, such as diethyl carbonate or diphenyl carbonate, with a diol or a polyol (e.g. ethylene glycol, propylene glycol or glycerol).

The molecular weight of the polymeric polyol of the second component is generally from 300 to 15 000 g/mol, more particularly from 400 to 10 000 g/mol, preferably from 800 to 6000 g/mol.

The weight content of polymeric polyol in the second component is advantageously from 50 to 90%, preferably from 60 to 80%, more preferably from 65 to 75%, based on the total weight of the second component.

Advantageously, the second component further comprises a monomeric polyol, preferably a monomeric diol, such as: ethylene glycol, 1,2-propanediol, 1,3-propanediol, 1,2-butanediol, 1,3-butanediol, 1,4-butanediol, 1,5-pentanediol, 1,6-hexanediol, neopentyl glycol, cyclohexane dimethanol, 1,2-cyclohexanediol and 1,4-cyclohexanediol, 1,8-octanediol, diethylene glycol, triethylene glycol, dipropylene glycol, tripropylene glycol, and any mixture thereof.

When present, the weight content of such monomeric polyol in the second component is advantageously from 0.5 to 5%, preferably from 1 to 4%, more preferably from 1 to 3%, based on the total weight of the second component.

The second component comprises water. The weight content of water in the second component is advantageously from 0.05 to 0.7 %, preferably from 0.1 to 0.5%, more preferably from 0.15 to 0.4%, for instance from 0.15 to 0.20 %, based on the total weight of the second component.

Typically, the second component of the kit of the invention is essentially free of NCO-containing compounds (e.g. polyisocyanate).

The amounts of reactants (i.e. polyisocyanate, polymeric polyol, optional monomeric polyol) of the first and second components are chosen so that the NCO/OH ratio of the kit is from 1 to 5. Such ratio allows a controlled reactivity and thus the reactants can be mixed and easily applied onto a substrate. Preferably, the NCO/OH ratio of the kit is from 2 to 4, more preferably from 2.2 to 2.8.

The NCO/OH ratio is the ratio of the molar amount of NCO groups in the kit to the molar amount of OH groups in the kit.

If not known, the molar amount of NCO groups in a polyisocyanate can be determined by titration according to standard NF EN ISO 14896 2009-05 - Plastics - Polyurethane raw materials - Determination of isocyanate content.

If not known, the molar amount of OH groups in a polyol can be determined by titration according to standard ISO 14900:2023 - Plastics - Polyols for use in the production of polyurethanes - Determination of hydroxyl number.

Each of the first and second components may further comprise one or more ingredients other than those described above. In particular, each of the first and second components may, independently from each other, further comprise one or more ingredients chosen from mineral fillers, plasticizers, pigments, foam stabilizers, foam catalysts, gelling catalysts, dispersing agents, flame retardants, thixotropic agents, and antioxidants.

Preferably, each of the first and second components comprises less than 2%, more preferably less than 1%, or even less than 0.5%, for instance less than 0.2 %, by weight of organic solvents and reactive diluents, relative to the total weight of the first and second components respectively.

Mineral fillers are preferably chosen from calcium carbonate, calcium stearate, clays, talc, dolomite, mica, silica sands, ground basalt, barium sulfate, kaolin, and any mixture thereof. The mineral fillers preferably have a particle size ranging from 0.5 to 500 μm, in particular from 1 to 200 μm, measured by laser granulometry.

Plasticizers are advantageously chosen from polyethylene glycol esters, adipates, sebacates, phthalates, benzoate esters and any mixture thereof. Examples of plasticizers include, but are not limited to, tri(ethylene glycol) di(2-ethylhexanoate), tri(ethylene glycol) di(2-ethylbutyrate), tri(ethylene glycol) di(n-heptanoate), tetra(ethylene glycol) di(n-heptanoate), bis(2-butoxyethyl) adipate, dibutyl sebacate, dibutyl phthalate, dioctyl phthalate or diisononyl phthalate, preferably diisononyl phthalate.

Pigments are preferably selected from inorganic pigments (e.g. titanium dioxide or iron oxide), organic pigments (e.g. carbon black), and any mixture thereof.

Foam stabilizers include, but are not limited to, silicones and siloxanes (e.g. methyl siloxane polymers or copolymers, such as polydimethylsiloxane).

The gelling catalyst aims typically at triggering and/or accelerating the reaction between polyisocyanates and polyols. Examples of gelling catalysts include, but are not limited to, amine-based catalysts (e.g. 1,4-diazabicyclo[2.2.2] octane, triethylenediamine, bis(dimethylaminoethyl) ether, N,N-dimethylcyclohexylamine), metal-based catalysts (e.g. dibutyltin dilaurate, stannous octoate, zinc neodecanoate, potassium acetate), or a mixture thereof.

The foam catalyst aims typically at triggering and/or accelerating the blowing reaction. Examples of foam catalysts include, but are not limited to, bis(2-dimethylaminoethyl) ether, N,N-dimethylcyclohexylamine, pentamethyldiethylenetriamine, N,N-dimethylethanolamine, 2,2'-dimorpholinyldiethyl ether, trimethylaminoethylethanolamine, or any mixture thereof.

Dispersing agents may for instance be a silicone-based, polyacrylate-based, or polyether-based dispersing agent.

Advantageously, the first component further comprises a plasticizer. The weight content of such plasticizer in the first component is advantageously from 7 to 25%, preferably from 10 to 25%, more preferably from 12 to 20%, for instance from 12 to 18%, based on the total weight of the first component.

Advantageously, the second component further comprises one or more, preferably all, of:

- a mineral filler (preferably in a weight content from 10 to 20%, more preferably from 12 to 18%, even more preferably from 14 to 16%, based on the total weight of the second component);
- a plasticizer (preferably in a weight content from 5 to 15%, more preferably from 7 to 12%, even more preferably from 8 to 10%, on the total weight of the second component);
- a pigment (preferably in a weight content from 0.5 to 5%, more preferably from 1 to 3%, based on the total weight of the second component);
- a foam stabilizer (preferably in a weight content from 0.1 to 2%, more preferably from 0.5 to 1.5%, based on the total weight of the second component);
- a foam catalyst (preferably in a weight content from 0.05 to 2%, more preferably from 0.1 to 0.5%, based on the total weight of the second component);
- a gelling catalyst (preferably in a weight content from 0.05 to 1%, more preferably from 0.1 to 0.5%, based on the total weight of the second component).

The kit of the invention is particularly suitable for forming a foamed waterproofing coating (e.g. a foamed waterproofing membrane). Thus, the present invention also relates to the use of a kit as defined herein for forming a foamed waterproofing coating.

Another object of the present invention is a foamed waterproofing coating formed from a kit as defined herein. More particularly, such foamed waterproofing coating is typically formed by a process comprising :

- contacting a first component and a second component of a kit as defined herein in order to form a mixture, and
- applying said mixture, for instance by using a brush, a roller or trowel or by spraying.

The foamed waterproofing coating of the invention is typically a foamed waterproofing membrane. The foamed waterproofing coating of the invention preferably has a thickness of from 0.1 to 5.0 mm, in particular from 0.5 to 3.0 mm, for instance from 1.0 to 2.5 mm.

Advantageously, the foamed waterproofing coating of the invention does not comprise a reinforcement, such as:

- a reinforcing mesh, such as a fiberglass mesh or a polymer (e.g. polyester) mesh,

- a reinforcing fabric, such as a non-woven fabric, woven fabric, glass fiber mat, or polymer (e.g. polyester) mat,
- a metal-based reinforcement, such as a metal (e.g. aluminum) foil, a metal sheet, or an expanded metal lath,
- reinforcing fibers, such as glass fibers or polymer fibers, or
- a scrim or netting, such as a polymer scrim or netting, for instance a polyester or high-density polyethylene netting.

The present invention also relates to a process for waterproofing a substrate, comprising:

i) providing a kit as defined herein,
ii) contacting the first component and the second component of the kit, so as to obtain a mixture, and
iii) applying said mixture on a substrate, so as to form a foamed waterproofing coating on said substrate,

said foamed waterproofing coating preferably having a thickness of 0.1 to 5.0 mm, in particular 0.5 to 3.0 mm, for instance 1.0 to 2.5 mm.

The applying in step iii) may be carried out by any suitable technique, such as by using a brush, a roller or a trowel. The applying can be done in one or several layers (for instance two layers), preferably in one layer.

The applying in step iii), and more generally the process, can be carried out at the ambient air, at room temperature, and without external heating.

The foamed waterproofing coating preferably having a thickness of 0.1 to 5.0 mm, in particular 0.5 to 3.0 mm, for instance 1.0 to 2.5 mm.

In some embodiments, the process of the invention further comprises:
iv) forming a top coating onto the foamed waterproofing coating.

Said top coating is advantageously a UV-resistant coating. Said top coating can comprise (or be formed from) a polyurethane (typically aliphatic polyurethane) or acrylic polymer dispersion. Preferably, the top coating comprises (or is formed from) an aliphatic polyurethane. The aliphatic polyurethane may for instance be obtained from an aliphatic diisocyanate, such as isophorone diisocyanate, and a polyol (and optionally in presence of a latent hardener, such bis-oxazolidine). The polyol is as defined above and is preferably a polymeric polyol (e.g. a polymeric polyol having a molecular weight from 500 to 5 000 g/mol), more preferably a polyester-polycarbonate polyol.

The top coating is applied at a rate of from 0.1 to 0.5 kg/m2, preferably from 0.15 to 0.20 kg/m2.

Advantageously, the process of the invention does not comprise a step of adding a reinforcement, such as those mentioned above. In other words, the process of the invention is implemented such that the foamed waterproofing coating formed on the substrate does not comprise a reinforcement, such as those mentioned above.

The substrate is preferably made of cementitious material (for example concrete or mortar), stone (in particular limestone), brick, terracotta, sandstone, ceramic, or any combination thereof, more preferably cementitious material.

Such substrates may in particular be substrates of a roof (e.g. flat roof).

Therefore, the process of waterproofing a substrate according to the invention may in particular be a process for waterproofing a roof (e.g. a flat roof).

The present invention also relates to a coated substrate, comprising a substrate and a foamed waterproofing coating disposed on the substrate, wherein said foamed waterproofing coating is as defined herein. The substrate is preferably made of cementitious material (for example concrete or mortar), stone (in particular limestone), brick, terracotta, sandstone, ceramic, or any combination thereof, more preferably cementitious material.

The substrate is typically a substrate of a building, typically a substrate of a roof.

The coated substrate of the invention may further comprise a top coating as defined above (e.g. a UV-resistant coating as defined above) disposed on the foamed waterproofing coating. Preferably, the foamed waterproofing coating of the invention does not comprise a reinforcement, such as those mentioned above. More generally, preferably, the coated substrate of the invention does not comprise a reinforcement, such as those mentioned above.

The present invention is illustrated by the following non-limiting examples.

EXAMPLES

Foamed coatings were formed from mixing and applying the kits, as described in Tables 1-4 below, on a concrete substrate. The foamed coatings were formed at 25°C and were tested (as described in Table 5 below) after 24 hours.

Thermal conductivity $\lambda$ of such coatings were measured by using a Heat Flow Meter (HFM). Conditions of the measurements:
- Temperature difference: 20°C
- Mean Temperature: 10°C
- Size of the coating: 30 cm x 30 cm

Table 1

| Sample 1 - NCO/OH ratio = 2.3 | |
|---|---|
| First component (1 part by weight) | Second component (2 parts by weight) |
| - 65 wt% Prepolymer formed from polymeric MDI and polyether polyol,<br>- 20 wt% Prepolymer formed from TDI and polyether polyol,<br>- 15 wt% plasticizer | - 65 wt% polyether triol,<br>- 7 wt% polyether diol,<br>- 9 wt% plasticizer,<br>- 2 wt% butane-1,4-diol,<br>- 15.7 wt% calcium carbonate,<br>- 0.3 wt% water<br>- 1 wt% foam stabilizer |

Table 2

| Sample 2 - NCO/OH ratio = 2.5 | |
|---|---|
| First component (1 part by weight) | Second component (2 parts by weight) |
| - 70 wt% Prepolymer formed from polymeric MDI and polyether polyol,<br>- 20 wt% Prepolymer formed from TDI and polyether polyol,<br>- 10 wt% plasticizer | - 65 wt% polyether triol,<br>- 7 wt% polyether diol,<br>- 9 wt% plasticizer,<br>- 2 wt% butane-1,4-diol,<br>- 15.7 wt% calcium carbonate,<br>- 0.3 wt% water<br>- 1 wt% foam stabilizer |

Table 3

| Sample 3 - NCO/OH ratio = 4.6 | |
|---|---|
| First component (1 part by weight) | Second component (1 part by weight) |
| - 65 wt% Prepolymer formed from polymeric MDI and polyether polyol,<br>- 21 wt% Prepolymer formed from TDI and polyether polyol,<br>- 14 wt% plasticizer | - 65 wt% polyether triol,<br>- 7 wt% polyether diol,<br>- 9 wt% plasticizer,<br>- 2 wt% butane-1,4-diol,<br>- 15.7 wt% calcium carbonate,<br>- 0.3 wt% water<br>- 1 wt% foam stabilizer |

Table 4

| Sample 4 - NCO/OH ratio = 4.8 | |
|---|---|
| First component (1 part by weight) | Second component (1 part by weight) |
| - 70 wt% Prepolymer formed from polymeric MDI and polyether polyol,<br>- 20 wt% Prepolymer formed from TDI and polyether polyol,<br>- 10 wt% plasticizer | - 65 wt% polyether triol,<br>- 7 wt% polyether diol,<br>- 9 wt% plasticizer,<br>- 2 wt% butane-1,4-diol,<br>- 15.7 wt% calcium carbonate,<br>- 0.3 wt% water<br>- 1 wt% foam stabilizer |

Table 5

| Sample | Mass (g) | Thickness (mm) | Density (kg/m3) | λ (W/m.K) |
|---|---|---|---|---|
| 1 | 428.6 | 14.84 | 321 | 0.065 |

(continued)

| Sample | Mass (g) | Thickness (mm) | Density (kg/m3) | λ (W/m.K) |
|---|---|---|---|---|
| 2 | 405.7 | 13.98 | 322 | 0.059 |
| 3 | 311.2 | 16.54 | 209 | 0.053 |
| 4 | 232.4 | 11.80 | 219 | 0.050 |

As shown in Table 5, the foamed coatings prepared from kits according to the invention show high thermal insulation properties.

<u>Test of Resistance to fatigue movement TR 008 (EAD 030350-00-0402)</u>

A coating, which was based on sample 3 as described above, was formed onto a surface of two pieces of a concrete substrate with gap, utilizing a gap protection spacer of 1.0 mm.

The substrate had the following dimensions: 401 mm x 200 mm. The installed coating was cut in longitudinal direction (square to the gap) to provide individual test specimens = 50 mm in width and a length = 150 mm. The number of test specimens in one direction (length or width) was three.

The test was carried out at a temperature of (-10 ± 2) °C.

<u>Test procedure:</u>

a. Position the fatigue testing machine in the cold box and adjust the temperature to (-10 ± 2) °C.
b. Fix the starting point and adjust the amplitude of movement and the speed of the movement to 16 mm/h.
c. Condition the cured test specimen including the substrate at a temperature of (-10 ± 2) °C for at least 16 hours.
d. Place the test specimen including the substrate in the fatigue testing machine. The test specimen shall be placed in such a way that movement occurs only at the gap in the substrate, which shall be exactly in line with the gap between the two rigid plates.
e. Start the fatigue procedure by increasing the 1.0 mm gap to 2.0 mm, remove the gap spacer and subsequently cycle between 2.0 and 0.0 mm.
f. Apply the number of cycles related to the product expected working life category as specified by the applicant.
g. Stop the test after the specified number of cycles. Take the test specimen from the cold box and return it to ambient temperature. Examine the test specimen thoroughly for effects such as loss of adhesion, cracks, delamination, splitting or tearing at the gap.
h. Measure the length of debonding, if any.
i. Determine the watertightness of the roof waterproofing kit over the gap at room temperature by using a pipe of sufficient size to impose a head of water of 100 mm during 24 hours.
j. Perform the test on the remaining test specimens.

The results of the test of resistance to fatigue movement are shown in Table 2.

Table 6

| Categorization of expected working life | Number of cycles of fatigue movement | Results |
|---|---|---|
| W1 | 250 | Pass |
| W2 | 500 | Pass |

As shown in Table 6, the foamed coatings prepared from kits according to the invention show a good resistance to fatigue movement.

<u>Tests of mechanical and waterproofing performances</u>

The elongation, tensile strength and water absorption of samples 1-4 described above were assessed.

Elongation and tensile strength were determined according to standard ASTM D 412. Water absorption was determined according to the following protocol: (i) measuring the weight of a foamed coating (5x5 cm, thickness ~ 1mm);

(ii) immersing the coating for 28 days in water; (iii) taking out and drying the coating with a paper; (iv) measuring the increase in weight.

Table 7

| Sample | Elongation (%) | Tensile strength (MPa) | Water absorption % after immersion for 28 days |
|---|---|---|---|
| 1 | 139 | 1.7 | 8 |
| 2 | 135 | 1.6 | 8.3 |
| 3 | 122 | 2.1 | 8.6 |
| 4 | 118 | 2.2 | 8.2 |

As shown in Table 7, the foamed coatings prepared from kits according to the invention show mechanical and waterproofing performances equivalent to conventional waterproofing coatings.

## Claims

**1.** A kit comprising :

- a first component comprising a polyisocyanate, and
- a second component comprising a polymeric polyol and water,

wherein the NCO/OH ratio is from 1 to 5, preferably from 1.2 to 4.5, more preferably from 1.5 to 4, even more preferably 2 to 4, for instance from 2 to 3.5, or even from 2.2 to 2.8.

**2.** The kit according to claim 1, wherein the polyisocyanate comprises at least one polymer having a NCO-functionality of at least 2, for instance from 2 to 6, from 2 to 5, from 2 to 4, from 2 to 3, or from 2 to 2.5.

**3.** The kit according to claim 1 or 2, wherein the polyisocyanate comprises:

- a polymer having a NCO-functionality of at least 2 which is formed from (i) a first monomeric diisocyanate and (ii) a polyol; and
- a polymer having a NCO-functionality of at least 2 which is formed from (i) a second monomeric diisocyanate or a polymer of said second monomeric diisocyanate having a NCO-functionality of at least 2 and (ii) a polyol;

said first monomeric diisocyanate and said second monomeric diisocyanate being different, wherein each of said first and second monomeric diisocyanate preferably comprises at least one aromatic group, such as at least one phenyl group.

**4.** The kit according to claim 3, wherein said first monomeric diisocyanate is toluene 2,4-diisocyanate, toluene 2,6-diisocyanate, or a mixture thereof, and said second monomeric diisocyanate is diphenylmethane-4,4'-diisocyanate, diphenylmethane-2,2'-diisocyanate, diphenylmethane-2,4'-diisocyanate, or a mixture thereof.

**5.** The kit according to any one of claims 1 to 4, wherein the polymeric polyol is a mixture of a polymer having a OH-functionality of 2 and a polymer having a OH-functionality of 3.

**6.** The kit according to any one of claims 1 to 5, wherein the second component further comprises a monomeric diol.

**7.** The kit according to any one of claims 1 to 6, wherein the weight content of water in the second component is from 0.05 to 0.7 %, preferably from 0.1 to 0.5%, more preferably from 0.15 to 0.4%, for instance from 0.15 to 0.20 %, based on the total weight of the second component.

**8.** The kit according to any one of claims 1 to 7, wherein (i) the first component further comprises a plasticizer, preferably in a weight content from 7 to 25%, more preferably from 10 to 25%, even more preferably from 12 to 20%, for instance from 12 to 18%, based on the total weight of the first component; and/or (ii) the second component further comprises one or more, preferably all, of:

- a mineral filler, preferably in a weight content from 10 to 20%, more preferably from 12 to 18%, more preferably from 14 to 16%, based on the total weight of the second component;
- a plasticizer, preferably in a weight content from 5 to 15%, more preferably from 7 to 12%, even more preferably from 8 to 10%, based on the total of the second component;
- a pigment, preferably in a weight content from 0.5 to 5%, more preferably from 1 to 3%, based on the total weight of the second component;
- a foam stabilizer, preferably in a weight content from 0.1 to 2%, more preferably from 0.5 to 1.5%, based on the total weight of the second component;
- a foam catalyst preferably in a weight content from 0.05 to 2%, more preferably from 0.1 to 0.5%, based on the total weight of the second component;
- a gelling catalyst preferably in a weight content from 0.05 to 1%, preferably from 0.1 to 0.5%, based on the total weight of the second component.

**9.** A foamed waterproofing coating formed from a kit as defined in any one of claims 1 to 8.

**10.** The foamed waterproofing coating according to claim 9, wherein said coating does not comprise a reinforcement, such as:

- a reinforcing mesh, such as a fiberglass mesh or a polymer mesh,
- a reinforcing fabric, such as a non-woven fabric, woven fabric, glass fiber mat, or polymer mat,
- a metal-based reinforcement, such as a metal foil, a metal sheet, or an expanded metal lath,
- reinforcing fibers, such as glass fibers or polymer fibers, or
- a scrim or netting, such as a polymer scrim or netting, for instance a polyester or high-density polyethylene netting.

**11.** A coated substrate, comprising a substrate and a foamed waterproofing coating disposed on the substrate, wherein said foamed waterproofing coating is as defined in claim 9 or 10.

**12.** A process for waterproofing a substrate, comprising:

i) providing a kit as defined in any one of claims 1 to 8,
ii) contacting the first component and the second component of the kit, so as to obtain a mixture, and
iii) applying said mixture on a substrate, so as to form a foamed waterproofing coating on said substrate,

wherein said substrate preferably is a substrate of a roof, in particular of a flat roof.

**13.** The process according to claim 12, wherein said process further comprises: iv) forming a top coating onto the foamed waterproofing coating.

**14.** The process according to claim 12 or 13, wherein said process does not comprise a step of adding a reinforcement, such as a reinforcing mesh, a reinforcing fabric, a metal-based reinforcement, reinforcing fibers, a scrim or netting.

**15.** Use of a kit as defined in any one of claims 1 to 8, for forming a foamed waterproofing coating.

Europäisches Patentamt
European Patent Office
Office européen des brevets

# EUROPEAN SEARCH REPORT

Application Number
EP 24 30 6955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/096976 A1 (YOSHINO KENJI [JP] ET AL) 7 April 2016 (2016-04-07) | 1,2,5,7, 8 | INV. C08G18/10 C08G18/32 C08G18/48 C08G18/66 C09D175/08 |
| A | * examples 1-29; tables 1-7 * ----- | 3,4 | |
| X | WO 2017/108832 A1 (SIKA TECH AG [CH]) 29 June 2017 (2017-06-29) | 1,2,5-8 | |
| A | * page 33, line 15 - line 19; examples Z1-Z3 * ----- | 3,4 | |
| X | EP 2 526 333 B1 (BASF SE [DE]) 7 May 2014 (2014-05-07) | 1,2,5,7, 8 | |
| A | * page 8 * * paragraph [0053]; claim 1 * ----- | 3,4 | |
| X | US 2023/235181 A1 (XUE QIANG [CN] ET AL) 27 July 2023 (2023-07-27) | 1,2,5, 7-15 | |
| A | * paragraph [0004]; examples 1-5 * ----- | 3,4 | |
| X | US 2024/150575 A1 (HU HAORAN [CN] ET AL) 9 May 2024 (2024-05-09) | 1,2,5-8 | |
| A | * claim 1; examples 1-7 * ----- | 3,4 | TECHNICAL FIELDS SEARCHED (IPC) |
| | | | C08G C09D |

The present search report has been drawn up for all claims

| Place of search | Date of completion of the search | Examiner |
|---|---|---|
| Munich | 28 April 2025 | Sütterlin, Martin |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 30 6955

This annex lists the patent family members relating to the patent documents cited in the above-mentioned European search report. The members are as contained in the European Patent Office EDP file on
The European Patent Office is in no way liable for these particulars which are merely given for the purpose of information.

28-04-2025

| Patent document cited in search report | Publication date | Patent family member(s) | Publication date |
|---|---|---|---|
| US 2016096976 A1 | 07-04-2016 | AU 2014269389 A1 | 19-11-2015 |
| | | EP 3006524 A1 | 13-04-2016 |
| | | JP 6077932 B2 | 08-02-2017 |
| | | JP 2014227522 A | 08-12-2014 |
| | | US 2016096976 A1 | 07-04-2016 |
| | | WO 2014189140 A1 | 27-11-2014 |
| WO 2017108832 A1 | 29-06-2017 | CN 108368233 A | 03-08-2018 |
| | | EP 3394132 A1 | 31-10-2018 |
| | | JP 6880062 B2 | 02-06-2021 |
| | | JP 2019506519 A | 07-03-2019 |
| | | US 2018371148 A1 | 27-12-2018 |
| | | WO 2017108832 A1 | 29-06-2017 |
| EP 2526333 B1 | 07-05-2014 | AU 2011206711 A1 | 02-08-2012 |
| | | BR 112012016995 A2 | 19-04-2016 |
| | | CA 2785436 A1 | 21-07-2011 |
| | | CN 102713400 A | 03-10-2012 |
| | | DK 2526333 T3 | 04-08-2014 |
| | | EP 2526333 A1 | 28-11-2012 |
| | | ES 2472717 T3 | 02-07-2014 |
| | | MX 347148 B | 17-04-2017 |
| | | PL 2526333 T3 | 31-10-2014 |
| | | PT 2526333 E | 11-06-2014 |
| | | WO 2011086025 A1 | 21-07-2011 |
| US 2023235181 A1 | 27-07-2023 | CN 114478981 A | 13-05-2022 |
| | | US 2023235181 A1 | 27-07-2023 |
| US 2024150575 A1 | 09-05-2024 | CN 115536797 A | 30-12-2022 |
| | | EP 4541831 A1 | 23-04-2025 |
| | | US 11987699 B1 | 21-05-2024 |
| | | WO 2024099040 A1 | 16-05-2024 |

EPO FORM P0459

For more details about this annex : see Official Journal of the European Patent Office, No. 12/82